# EUROPEAN PATENT SPECIFICATION

(11) **EP 3 490 305 B1**
(45) Date of publication and mention of the grant of the patent: **13.05.2020**
(21) Application number: 17878969.9
(22) Date of filing: 12.09.2017
(51) Int. Cl.: H04W 48/16, H04W 48/20, H04W 52/02, H04W 12/06, H04W 84/12

(54) **WIRELESS FIDELITY (WI-FI) SCANNING METHOD AND RELATED PRODUCT**
WIRELESS-FIDELITY (WI-FI)-ABTASTVERFAHREN UND ZUGEHÖRIGES PRODUKT
PROCÉDÉ DE BALAYAGE WIRELESS FIDELITY (WI-FI) ET PRODUIT ASSOCIÉ

(30) Priority: 07.12.2016 CN 201611143072
(43) Date of publication of application: 29.05.2019
(73) Proprietor: GUANGDONG OPPO MOBILE TELECOMMUNICATIONS CORP., LTD., Wusha, Chang'an Dongguan, Guangdong 523860 (CN)
(72) Inventor: YU, Yi, Dongguan Guangdong 523860 (CN)
(74) Representative: Manitz Finsterwald Patent- und Rechtsanwaltspartnerschaft mbB
(86) International application number: PCT/CN2017/101466
(87) International publication number: WO 2018/103404

(56) References cited:
- WO-A1-2013/178111
- WO-A1-2013/184110
- CN-A- 103 716 857
- CN-A- 104 619 040
- CN-A- 104 869 613
- CN-A- 105 979 516
- CN-A- 106 604 363
- US-A1- 2010 265 885

## Description

### TECHNICAL FIELD

The present disclosure relates to the field of Internet technology, and more particularly to a method for wireless fidelity (Wi-Fi®) network scan and related products.

### BACKGROUND

With the rapid development of information technology, mobile terminals (such as mobile phones, tablets, etc.) are widely used. The performance of the mobile terminals required by users is increasingly high, not only high processing speed is required, but also high requirement for a function of the mobile terminals that can be connected to a wireless fidelity (Wi-Fi) network is made by the users. Experience related to the Wi-Fi network increasingly attracts user's attention. The function of the mobile terminals that can be connected to the Wi-Fi network is also widely used, and is an indispensable function of the mobile terminals.

Presently, the mobile terminals are desired to be not prone to be disconnected from an access point (AP), and also desired to be quickly reconnected to a router after being disconnected from one AP.

US 2010/0265885A1 relates to an access point scan method by which a station disconnected from an access points scans for a next access point to which the station can be connected at a predetermined scan interval, the station sets a shorter scan interval when a possibility of connection to the next access point to which the station can be connected is presumed to be high or a need for connection is presumed to be great, and sets a longer scan interval when the possibility of connection is presumed to be low or the need for connection is presumed to be small, based on one of information on the access point to which the station being connected just before disconnection and information on the station.

WO 2013/0178111A1 relates to a wireless local area network WLAN hotspot search control method and device. The method comprises: obtaining identification information of a cell base station where a mobile terminal is located; inquiring whether the mobile terminal is in a WLAN coverage area according to the identification information; if an inquire result is yes, stating a WLAN hotspot search function of the mobile terminal, and adjusting the scanning frequency of the WLAN hotspot search function according to coverage area information of the WLAN, the coverage area information comprising location information and/or wireless environment information.

### SUMMARY

A method for Wi-Fi network scan and related products are provided according to embodiments of the present disclosure, which can improve efficiency of Wi-Fi network scan after being disconnected from a Wi-Fi network.

According to a first embodiment, a method for Wi-Fi network scan as set in claim 1 is provided.

According to a second embodiment, a device for Wi-Fi network scan as set out in claim 7 is provided.

According to a third embodiment, a computer program as set out in claim 12 is provided.

According to a fourth embodiment, a computer-readable medium as set out in claim 13 is provided.

### BRIEF DESCRIPTION OF THE DRAWINGS

To describe technical solutions in embodiments of the present disclosure more clearly, the following briefly introduces the accompanying drawings required for describing the embodiments. Apparently, the accompanying drawings in the following description merely illustrate some embodiments of the present disclosure. Those of ordinary skill in the art may also obtain other drawings according to these accompanying drawings without creative efforts.
FIG. 1 is a flow chart illustrating a method for wireless fidelity (Wi-Fi) network scan according to a first embodiment of the present disclosure.
FIG. 1a is a schematic diagram illustrating a Wi-Fi network list according to an embodiment of the present disclosure.
FIG. 2 is a flow chart illustrating a method for Wi-Fi network scan according to a second embodiment of the present disclosure.
FIG. 3a is a block diagram illustrating a device for Wi-Fi network scan according to an embodiment of the present disclosure.
FIG. 3b is a block diagram illustrating an initiating unit of the device for the Wi-Fi network scan illustrated in FIG. 3a according to an embodiment of the present disclosure.
FIG. 3c is another block diagram illustrating the initiating unit of the device for the Wi-Fi network scan illustrated in FIG. 3a according to an embodiment of the present disclosure.
FIG. 3d is a block diagram illustrating a second scanning module of the initiating unit illustrated in FIG. 3c according to an embodiment of the present disclosure.
FIG. 3e is a block diagram illustrating a selecting module of the second scanning module illustrated in FIG. 3d according to an embodiment of the present disclosure.
FIG. 3f is yet another block diagram illustrating the device for the Wi-Fi network scan illustrated in FIG. 3a according to an embodiment of the present disclosure.
FIG. 4 is a block diagram illustrating a mobile terminal according to an embodiment of the present disclosure.

### DETAILED DESCRIPTION

Generally, when a user moves beyond a coverage area of an access point (AP), a mobile terminal of the user is disconnected from the AP. However, when returning to the coverage area of the AP, the mobile terminal fails to be connected to the AP quickly. The main reason is generally that a wireless fidelity (Wi-Fi) chip of the mobile terminal usually executes Wi-Fi network scan at a fixed frequency. After executing the Wi-Fi network scan once, if the mobile terminal still fails to be connected to a Wi-Fi network, the mobile terminal needs to wait a long time before next Wi-Fi network scan. Therefore, how to improve efficiency of the Wi-Fi network scan needs to be solved instantly. Therefore, a method for Wi-Fi network scan and related products are provided according to embodiments of the present disclosure, which can improve the efficiency of the Wi-Fi network scan after being disconnected from the Wi-Fi network.

Hereinafter, technical solutions embodied by the embodiments of the present disclosure will be described in a clear and comprehensive manner in reference to the accompanying drawings intended for the embodiments.

The terms "first", "second", "third", "fourth", and the like used in the specification, the claims, and the accompany drawings of the present disclosure are used to distinguish different objects rather than describe a particular order. The terms "include", "comprise", and "have" as well as variations thereof are intended to cover non-exclusive inclusion. For example, a process, method, system, product, or apparatus including a series of steps or units is not limited to the listed steps or units, on the contrary, it can optionally include other steps or units that are not listed; alternatively, other steps or units inherent to the process, method, product, or device can be included either.

The term "embodiment" or "embodiment" referred to herein means that a particular feature, structure, or feature described in conjunction with the embodiment may be included in at least one embodiment of the present disclosure. The phrase appearing in various places in the specification does not necessarily refer to the same embodiment, nor does it refer to an independent or alternative embodiment that is mutually exclusive with other embodiments. It is explicitly and implicitly understood by those skilled in the art that an embodiment described herein may be combined with other embodiments.

"Mobile terminal" in the embodiments of the present disclosure may include smart phones (such as Android® phones, iOS® phones, Windows Phones, etc.), tablet PCs, palmtops, laptops, mobile Internet devices (MID), wearable devices, or the like. The above-mentioned mobile terminals are merely illustrative and not exhaustive, including but not limited to the above-described mobile terminals.

It is to be noted that, the mobile terminal generally is in a state of in connection with the Wi-Fi network. It is assumed that the mobile terminal is connected to an AP *A*, when the mobile terminal is not within a coverage area of the AP *A*, beacon timeout happens. That is, when failing to receive a beacon frame from the AP *A* for a long time, the mobile terminal determines that the mobile terminal is beyond the coverage area of the AP *A,* and is disconnected from the Wi-Fi network. Currently, the mobile terminal is disconnected from the Wi-Fi network as follows.

Firstly, after being disconnected from the Wi-Fi network, the mobile terminal re-executes Wi-Fi network scan at a certain frequency (i.e., a fixed frequency), for example, executes the Wi-Fi network scan once every 30 seconds. However, since power consumption of the mobile terminal increases when executing the Wi-Fi network scan frequently, the frequency at which the Wi-Fi network scan is executed cannot be set to be large.

Secondly, after scanning the Wi-Fi network, a result of the Wi-Fi network scan (i.e., a Wi-Fi network list) is reported to an operating system of the mobile terminal. The system can determine, based on a history connection record, whether there is an AP (including the AP A) previously connected by the mobile terminal.

Finally, when the AP *A* exists, a communication connection between the AP *A* and the mobile terminal is established. When there is another AP previously connected by the mobile terminal, the mobile terminal is then connected to the other AP.

In the above-mentioned process, the mobile terminal executes the Wi-Fi network scan at the fixed frequency, thus a Wi-Fi network scan mode fails to be initiated quickly even if the beacon frame is received, thereby reducing the efficiency of the Wi-Fi network scan.

In one embodiment, when the mobile terminal is disconnected from the Wi-Fi network, the Wi-Fi network scan is executed as follows.

After the mobile terminal is disconnected from a target AP, the mobile terminal monitors whether the Wi-Fi chip of the mobile terminal receives the beacon frame from the target AP, and executes the Wi-Fi network scan at a preset scan frequency.

When the Wi-Fi chip of the mobile terminal fails to receive the beacon frame from the target AP, the mobile terminal continues to execute the Wi-Fi network scan at the preset scan frequency.

When the Wi-Fi chip of the mobile terminal receives the beacon frame from the target AP, the mobile terminal initiates the Wi-Fi network scan mode.

In this way, once the mobile terminal receives the beacon frame, the Wi-Fi network scan mode can be quickly initiated, thereby improving the efficiency of the Wi-Fi network scan.

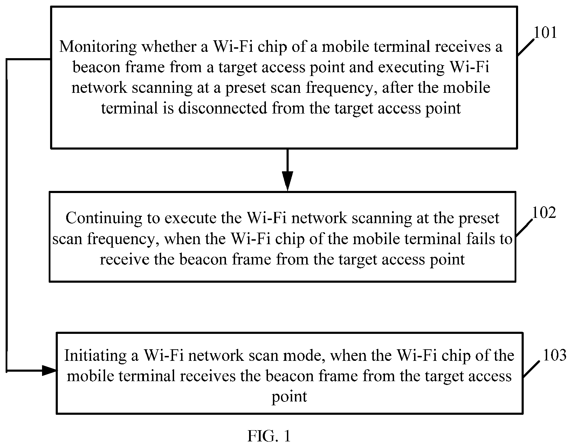

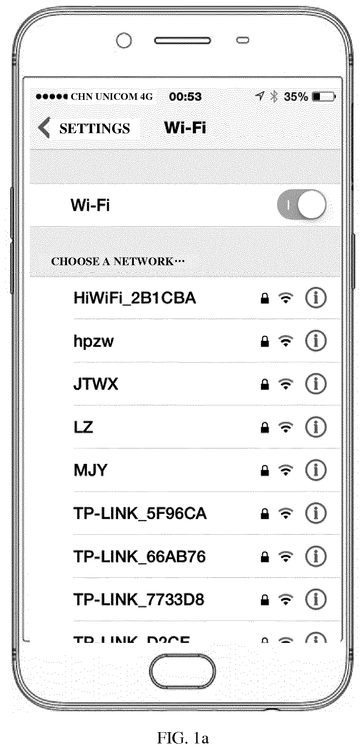

FIG. 1 is a flow chart illustrating a method for Wi-Fi network scan according to a first embodiment of the present disclosure. In this embodiment, the method for the Wi-Fi network scan includes the following.

Step 101, after a mobile terminal is disconnected from a target AP, the mobile terminal monitors whether a Wi-Fi chip of the mobile terminal receives a beacon frame from the target AP, and executes Wi-Fi network scan at a preset scan frequency.

A communication connection between the mobile terminal and the target AP has been established prior to Step 101, and the mobile terminal is disconnected from the target AP in step 101. Therefore, one thread can be adopted to monitor whether the Wi-Fi chip of the mobile terminal receives the beacon frame from the target AP, and another thread can be further adopted to execute the Wi-Fi network scan at the preset scan frequency. In one embodiment, the target AP can broadcast the beacon frame at a certain frequency, and only mobile terminals within the coverage area of the target AP can receive the beacon frame. The preset scan frequency may be set by the system of the mobile terminal by default, or may be set by the user. Generally, the preset scan frequency cannot be set to be large, because the larger the number of times of executing the Wi-Fi network scan is, the greater the power consumption of the mobile terminal is.

In one embodiment of the present disclosure, the beacon frame is broadcast by the target AP, and the target AP is configured to broadcast the beacon frame at a broadcast frequency larger than the preset scan frequency.

Step 102, when the Wi-Fi chip of the mobile terminal fails to receive the beacon frame from the target AP, the mobile terminal continues to execute the Wi-Fi network scan at the preset scan frequency.

In movement of the mobile terminal, if the mobile terminal is beyond the coverage area of the target AP, the mobile terminal fails to receive the beacon frame. In this case, executing the Wi-Fi network scan at the preset scan frequency by the Wi-Fi chip is not interrupted. In this way, the mobile terminal still executes the Wi-Fi network scan at the preset scan frequency, and monitors the beacon frame.

Step 103, when the Wi-Fi chip of the mobile terminal receives the beacon frame from the target AP, the mobile terminal initiates a Wi-Fi network scan mode.

When the Wi-Fi chip of the mobile terminal receives the beacon frame from the target AP, an instruction for forcing to scan is transmitted to the Wi-Fi chip. That is, the Wi-Fi network scan mode is initiated immediately to execute the Wi-Fi network scan without waiting for one complete scan cycle.

For example, it is assumed that the preset scan frequency is executing the Wi-Fi network scan once every 30 seconds, and the beacon frame from the target AP is broadcast once every second. After executing the Wi-Fi network scan once, the Wi-Fi network scan is reexecuted upon elapse of a scan interval of 30 seconds. In this case, when the beacon frame is detected by the mobile terminal within the scan interval of 30 seconds, the mobile terminal directly controls the Wi-Fi chip to enter a scan state without waiting for the complete scan cycle of 30 seconds. In this way, the AP corresponding to the beacon frame can be quickly scanned, such that the mobile terminal can be connected to the AP conveniently and quickly.

In short, when the mobile terminal is within the coverage area of the AP A, and the communication connection between the mobile terminal and the AP A is established, after the mobile terminal is beyond the coverage area of the AP A, the mobile terminal is disconnected from the AP A. When the mobile terminal re-enters the coverage area of the AP A, the beacon frame can be received, thus the Wi-Fi chip is forced to scan the Wi-Fi network.

In one embodiment, the Wi-Fi network scan mode is initiated as follows.

AP information of the target AP corresponding to the beacon frame is acquired, and the Wi-Fi network scan is executed based on the AP information.

The mobile terminal can directly determine the target AP corresponding to the beacon frame and the AP information of the target AP, and execute the Wi-Fi network scan based on the AP information. In this way, it does not need to scan other APs, thereby increasing a speed of the Wi-Fi network scan.

In one embodiment, the Wi-Fi network scan mode is initiated as follows.

Step A, when the Wi-Fi chip fails to be in the scan state, a scan instruction is transmitted to the Wi-Fi chip.

Step B, the Wi-Fi network scan is executed in response to the scan instruction.

When the Wi-Fi chip fails to be in the scan state at this point, the scan instruction can be transmitted to the Wi-Fi chip. The Wi-Fi chip can execute the Wi-Fi network scan after receiving the scan instruction. Since the beacon frame from the target AP is detected, it means that the mobile terminal has entered the coverage area of the target AP. If the Wi-Fi chip fails to be in the scan state at this point, the instruction for forcing to scan can be generated and transmitted to the Wi-Fi chip. The Wi-Fi chip quickly initiates the scan mode after receiving the instruction for forcing to scan.

In one embodiment, in step B, in response to the scan instruction, the Wi-Fi network scan is executed as follows.

Step B1, a previous scan record associated with the target AP is acquired, the previous scan record includes information of *M* APs, where *M* is an integer larger than one.

Step B2, information of *N* APs is selected from the information of the *M* APs, where *N* is a positive integer smaller than or equal to *M.*

Step B3, the Wi-Fi network scan is executed based on the information of the *N* APs.

The mobile terminal can generate one scan record (that is, the Wi-Fi network list illustrated in FIG. 1a, FIG. 1a is a schematic diagram illustrating the Wi-Fi network list) after executing the Wi-Fi network scan once. The scan record can include multiple APs and information of the multiple APs. In step B1, the mobile terminal can acquire the previous scan record associated with the target AP, where the previous scan record can be understood as a scan record acquired at a time closest to the current time, and the above-identified "the scan record associated with the target AP" means that "the scan record includes the target AP and the information of the target AP". Assuming that the previous scan record includes the information of the *M* APs, the information of the *N* APs may be selected from the information of the *M* APs. Since the information of the *M* APs may include information of some APs having low security, information of some APs encrypted with dynamic passwords, or information of some unstable APs, etc., it needs to exclude the information of the APs with the above-mentioned situations from the information of the *M* APs, such that scan speed of the Wi-Fi chip can be improved to some extent. When an AP is scanned, the Wi-Fi chip needs to determine signal strength and stability of the AP, which consumes power and time. Thus, in the previous scan record, the APs encrypted with dynamic passwords, the APs having low security, or the unstable APs can be directly marked, such that APs (assuming that the information of the *N* APs is acquired, where *N* is a positive integer smaller than or equal to M) other than the APs marked can be directly scanned, thereby executing the Wi-Fi network scan based on the information of the *N* APs.

In one embodiment, in step B2, the information of the *N* APs is selected from the information of the *M* APs as follows.

Step B21, stability of each of the *M* APs is evaluated based on the information of the *M* APs to acquire *M* stability evaluation values.

Step B22, information of APs corresponding to *N* stability evaluation values of the *M* stability evaluation values is acquired, where each of the *N* stability evaluation values is larger than a preset stability threshold.

In step B21, the stability evaluation value of each of the *M* APs can be determined, and the stability evaluation value of each of the *M* APs is adopted to evaluate the stability of each of the *M* APs. The larger the stability evaluation value of one AP is, the higher the stability of the AP is. The preset stability threshold may be set by the system of the mobile terminal by default, or may be set by the user. After determining the stability evaluation value of each of the *M* APs, the mobile terminal may further acquire the information of the APs corresponding to the *N* stability evaluation values of the *M* stability evaluation values, where each of the *N* stability evaluation values is larger than the preset stability threshold.

In one embodiment, in step B21, based on the information of the *M* APs, the stability of each of the *M* APs is evaluated as follows.

Step B211, *M* stability evaluation index sets are acquired by extracting stability evaluation indexes from the information of the *M* APs.

Step B212, the stability of each of the *M* APs is evaluated based on the *M* stability evaluation index sets.

Each of the above-mentioned M stability evaluation index sets includes at least one stability evaluation index. In one embodiment, at least one stability evaluation index may be adopted to evaluate the stability of each AP to obtain the stability evaluation value of each AP. The at least one stability evaluation index for each AP may include, but is not limited to, the number of access users of each AP, a signal strength value of each AP, a network rate of each AP, and a network bandwidth of each AP, or the like.

It is to be noted that since certain limitations may be introduced by evaluating the stability of each AP based on one stability evaluation index, multiple stability evaluation indexes can be adopted to evaluate the stability of each AP. Certainly, it may not be good to adopt many stability evaluation indexes to evaluate the stability of each AP, because the more stability evaluation indexes are, the higher computational complexity of the stability evaluation is, and stability evaluation effect may not be good. Therefore, in the case that requirement for the stability evaluation is high, multiple stability evaluation indexes ranging from two to ten may be adopted to evaluate the stability of each AP. In one embodiment, the number of stability evaluation indexes and the selection of indexes may be determined based on specific embodiment conditions.

In one embodiment, in the case that requirement for accuracy of the stability evaluation of each AP is high, multiple stability evaluation indexes may be adopted to evaluate the stability of each AP. When evaluating the stability of each AP based on the multiple stability evaluation indexes, a weight of each of the multiple stability evaluation indexes is set to acquire multiple stability evaluation values, and a final stability evaluation value can be acquired based on the multiple stability evaluation values and the corresponding weights. For example, three stability evaluation indexes, i.e., an index *A,* an index *B,* and an index *C* are adopted. A weight of the index *A* is *a1,* a weight of the index *B* is *a2,* and a weight of the index *C* is *a3.* When the stability of one AP is evaluated with the index *A,* the index *B,* and the index *C,* a stability evaluation value corresponding to the index A is *b1,* a stability evaluation value corresponding to the index *B* is *b2,* and a stability evaluation value corresponding to the index *C is b3.* The final stability evaluation value equals to a sum of *a1* multiplied by *b1, a2* multiplied by *b2,* and *a3* multiplied by *b3.* Generally, the larger the stability evaluation value is, the higher the stability of the AP is.

In one embodiment, the method may further include the following after step 103.

When the target AP previously connected by the mobile terminal is scanned by the mobile terminal, a password is input automatically, and the mobile terminal is connected to the target AP based on the password.

Since the mobile terminal was previously connected to the target AP, the password corresponding to the target AP is stored in the mobile terminal. After step 103, when the target AP is scanned by the mobile terminal in the Wi-Fi network scan, the password can be automatically input when the target AP is scanned once more, whereby the mobile terminal can be quickly connected to the target AP.

It can be seen that in the embodiments of the present disclosure, after the mobile terminal is disconnected from the target AP, the mobile terminal monitors whether the Wi-Fi chip of the mobile terminal receives the beacon frame from the target AP and executes the Wi-Fi network scan at the preset scan frequency. When the Wi-Fi chip of the mobile terminal fails to receive the beacon frame from the target AP, the mobile terminal continues to execute the Wi-Fi network scan at the preset scan frequency. When the Wi-Fi chip of the mobile terminal receives the beacon frame from the target AP, the mobile terminal initiates the Wi-Fi network scan mode. Thus, after being disconnected from the Wi-Fi network, on one hand, the Wi-Fi chip executes the Wi-Fi network scan at the preset scan frequency, on the other hand, when the beacon frame of the target AP is received, the Wi-Fi chip is forced to execute the Wi-Fi network scan without waiting for a finish of one complete scan cycle. In this way, the Wi-Fi network scan can be quickly initiated, thereby improving the efficiency of the Wi-Fi network scan.

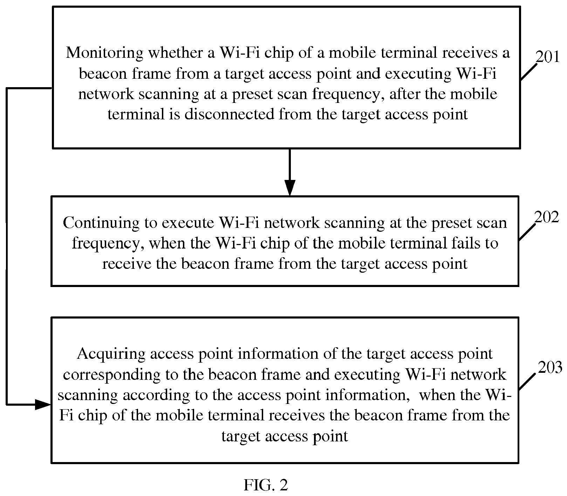

Consistent with the above embodiment, FIG. 2 is a flow chart illustrating a method for Wi-Fi network scan according to a second embodiment of the present disclosure. In this embodiment, the method for the Wi-Fi network scan includes the following steps.

Step 201, after a mobile terminal is disconnected from a target AP, the mobile terminal monitors whether a Wi-Fi chip of the mobile terminal receives a beacon frame from the target AP, and executes Wi-Fi network scan at a preset scan frequency.

Step 202, when the Wi-Fi chip of the mobile terminal fails to receive the beacon frame from the target AP, the mobile terminal continues to execute the Wi-Fi network scan at the preset scan frequency.

Step 203, when the Wi-Fi chip of the mobile terminal receives the beacon frame from the target AP, the mobile terminal acquires AP information of the target AP corresponding to the beacon frame, and executes the Wi-Fi network scan based on the AP information.

In one embodiment, the beacon frame from the target AP may carry a hardware address of the target AP. When the Wi-Fi chip of the mobile terminal receives the beacon frame from the target AP, the Wi-Fi network scan can be executed based on the hardware address. Since just scanning the target AP is executed, and other APs need not to be scanned, the scan speed can be improved to some extent. Since the mobile terminal was previously connected to the target AP, and the password corresponding to the target AP is stored in the mobile terminal, after the target AP is scanned once more, the password can be automatically input, whereby the mobile terminal can quickly be connected to the target AP.

It can be seen that in the embodiment of the present disclosure, after the mobile terminal is disconnected from the target AP, the mobile terminal monitors whether the Wi-Fi chip of the mobile terminal receives the beacon frame from the target AP, and executes the Wi-Fi network scan at the preset scan frequency. When the Wi-Fi chip of the mobile terminal fails to receive the beacon frame from the target AP, the mobile terminal continues to execute the Wi-Fi network scan at the preset scan frequency. When the Wi-Fi chip of the mobile terminal receives the beacon frame from the target AP, the mobile terminal initiates the Wi-Fi network scan mode. Thus, after being disconnected from the Wi-Fi network, on one hand, the Wi-Fi chip executes the Wi-Fi network scan at the preset scan frequency, on the other hand, when the beacon frame of the target AP is received, the Wi-Fi chip is forced to execute the Wi-Fi network scan without waiting for a finish of one complete scan cycle. In this way, the Wi-Fi network scan can be quickly initiated, thereby improving the efficiency of the Wi-Fi network scan.

Consistent with the above embodiments, a device for implementing the above-mentioned method for Wi-Fi scanning is described as follows.

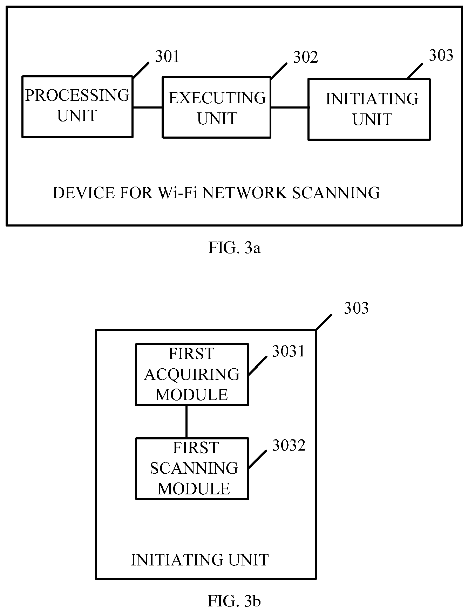

FIG. 3a is a block diagram illustrating the device for Wi-Fi network scan according to an embodiment of the present disclosure. The device for the Wi-Fi network scan described in the embodiment of the present disclosure includes a processing unit 301, an executing unit 302, and an initiating unit 303.

The processing unit 301 is configured to monitor whether a Wi-Fi chip of a mobile terminal receives a beacon frame from a target AP and to execute Wi-Fi network scan at a preset scan frequency, after the mobile terminal is disconnected from the target AP.

The executing unit 302 is configured to continue to execute the Wi-Fi network scan at the preset scan frequency, when the Wi-Fi chip of the mobile terminal fails to receive the beacon frame from the target AP.

The initiating unit 303 is configured to initiate a Wi-Fi network scan mode when the Wi-Fi chip of the mobile terminal receives the beacon frame from the target AP.

In one embodiment, FIG. 3b is a block diagram illustrating the initiating unit 303 of the device for the Wi-Fi network scan illustrated in FIG. 3a. The initiating unit 303 includes a first acquiring module 3031 and a first scanning module 3032.

The first acquiring module 3031 is configured to acquire AP information of the target AP corresponding to the beacon frame.

The first scanning module 3032 is configured to execute the Wi-Fi network scan based on the AP information.

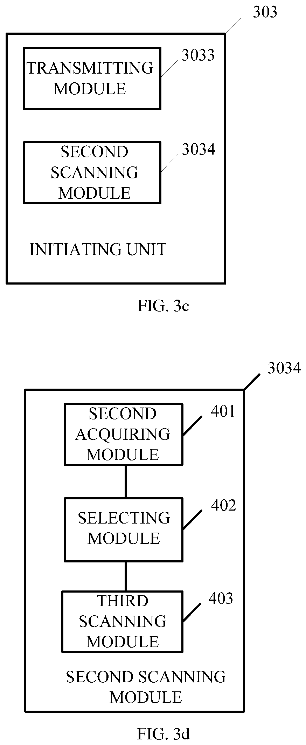

In one embodiment, FIG. 3c is another block diagram illustrating the initiating unit 303 of the device for the Wi-Fi network scan illustrated in FIG. 3a. The initiating unit 303 includes a transmitting module 3033 and a second scanning module 3034.

The transmitting module 3033 is configured to transmit a scan instruction to the Wi-Fi chip when the Wi-Fi chip® fails to be in a scan state.

The second scanning module 3034 is configured to execute the Wi-Fi network scan in response to the scan instruction.

Furthermore, in one embodiment, FIG. 3d is a block diagram illustrating the second scanning module 3034 of the initiating unit 303 illustrated in FIG. 3c. The second scanning module 3034 includes a second acquiring module 401, a selecting module 402, and a third scanning module 403.

The second acquiring module 401 is configured to acquire a previous scan record associated with the target AP, the previous scan record includes information of *M* APs, where *M* is an integer larger than one.

The selecting module 402 is configured to select information of *N* APs from the information of the *M* APs, where *N* is a positive integer smaller than or equal to *M.*

The third scanning module 403 is configured to execute the Wi-Fi network scan based on the information of the *N* APs.

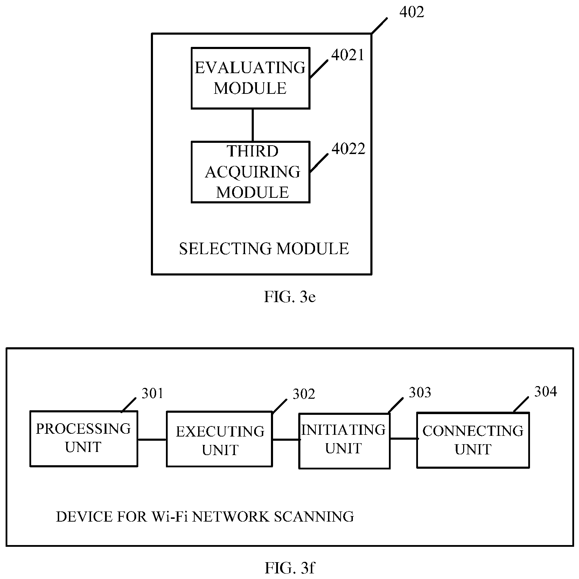

Furthermore, in one embodiment, FIG. 3e is a block diagram illustrating the selecting module 402 of the second scanning module 3034 illustrated in FIG. 3d. The selecting module 402 includes an evaluating module 4021 and a third acquiring module 4022.

The evaluating module 4021 is configured to evaluate stability of each of the *M* APs based on the information of the *M* APs to acquire *M* stability evaluation values.

The third acquiring module 4022 is configured to acquire the information of the *N* APs by acquiring information of APs corresponding to *N* stability evaluation values of the *M* stability evaluation values, where each of the N stability evaluation values is larger than a preset stability threshold.

In one embodiment, the beacon frame is broadcast by the target AP, and the target AP is configured to broadcast the beacon frame at a broadcast frequency larger than the preset scan frequency.

In one embodiment, FIG. 3f is a block diagram illustrating a modification of the device for the Wi-Fi network scan illustrated in FIG. 3a. Compared with FIG. 3a, the device in FIG. 3f further includes a connecting unit 304.

The connecting unit 304 is configured to input a password automatically and to connect the mobile terminal to the target AP based on the password, when the target AP is scanned by the mobile terminal, where the target AP is an AP to which the mobile terminal was previously connected.

It can be seen that, by means of the device for the Wi-Fi network scan provided by the embodiment of the present disclosure, after the mobile terminal is disconnected from the target AP, whether the Wi-Fi chip of the mobile terminal receives the beacon frame from the target AP is monitored, and the Wi-Fi network scan is executed at the preset scan frequency. When the Wi-Fi chip of the mobile terminal fails to receive the beacon frame from the target AP, the Wi-Fi network scan is continuously executed at the preset scan frequency. When the Wi-Fi chip of the mobile terminal receives the beacon frame from the target AP, the Wi-Fi network scan mode is initiated. Thus, after being disconnected from the Wi-Fi network, on one hand, the Wi-Fi chip executes the Wi-Fi network scan at the preset scan frequency, on the other hand, when the beacon frame of the target AP is received, the Wi-Fi chip is forced to execute the Wi-Fi network scan without waiting for a finish of one complete scan cycle. In this way, the Wi-Fi network scan can be quickly initiated, thereby improving the efficiency of the Wi-Fi network scan.

It should be noted that, the devices for the Wi-Fi network scan described in the embodiments of the present disclosure are presented in the form of functional units. The term "unit" used herein should be understood as the broadest meaning as possible, and an object for achieving functions defined by each "unit" may be, for example, an application-specific integrated circuit (ASIC), a single circuit, a processor (shared, dedicated, or chipset) and a memory for executing one or more software or firmware programs, a combinational logic circuit, and/or other suitable components that can achieve the above described functions.

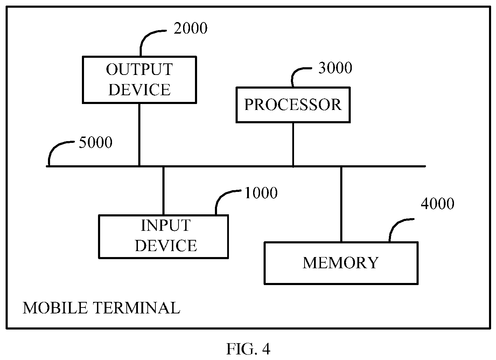

As an example, after the mobile terminal is disconnected from the target AP, the processing unit 301 configured to monitor whether the Wi-Fi chip of the mobile terminal receives the beacon frame from the target AP and to execute the Wi-Fi network scan at the preset scan frequency can be implemented by a mobile terminal illustrated in FIG. 4. In an embodiment, the mobile terminal may invoke executable program codes in a memory 4000 through a processor 3000 to monitor whether the Wi-Fi chip of the mobile terminal receives the beacon frame from the target AP and to execute the Wi-Fi network scan at the preset scan frequency, after the mobile terminal is disconnected from the target AP.

Consistent with the above embodiments, FIG. 4 is a block diagram illustrating a mobile terminal according to an embodiment of the present disclosure. As illustrated in FIG. 4, the mobile terminal includes at least one input device 1000, at least one output device 2000, at least one processor 3000 (such as a CPU), and a memory 4000. The input device 1000, the output device 2000, the processor 3000, and the memory 4000 are coupled with each other via a bus 5000.

In one embodiment, the at least one input device 1000 may be a touch panel, a physical button, a mouse, or the like.

In one embodiment, the at least one output device 2000 may be a display screen.

In one embodiment, the memory 4000 may be a high speed RAM memory, or may be a non-volatile memory such as a disk memory. The memory 4000 is configured to store a set of program codes. The input device 1000, the output device 2000, and the processor 3000 are configured to invoke the program codes stored in the memory 4000 to carry out the following.

The processor 3000 is configured to monitor whether a Wi-Fi chip of the mobile terminal receives a beacon frame from a target AP and to execute Wi-Fi network scan at a preset scan frequency after the mobile terminal is disconnected from the target AP, to continue to execute the Wi-Fi network scan at the preset scan frequency when the Wi-Fi chip of the mobile terminal fails to receive the beacon frame from the target AP, and to initiate a Wi-Fi network scan mode when the Wi-Fi chip of the mobile terminal receives the beacon frame from the target AP.

In one embodiment, the processor 3000 configured to initiate the Wi-Fi network scan mode is configured to acquire AP information of the target AP corresponding to the beacon frame, and to execute the Wi-Fi network scan based on the AP information.

In one embodiment, the processor 3000 configured to initiate the Wi-Fi network scan mode is configured to transmit a scan instruction to the Wi-Fi chip when the Wi-Fi chip fails to be in a scan state, and to execute the Wi-Fi network scan in response to the scan instruction.

In one embodiment, the processor 3000 configured to execute the Wi-Fi network scan in response to the scan instruction is configured to acquire a previous scan record associated with the target AP, the previous scan record includes information of *M* APs, where *M* is an integer larger than one. The processor 3000 is further configured to select information of *N* APs from the information of the *M* APs, where *N* is a positive integer smaller than or equal to *M.* The processor 3000 is further configured to execute the Wi-Fi network® scanning based on the information of the *N* APs.

In one embodiment, the processor 3000 configured to select the information of *N* APs from the information of the *M* APs is configured to evaluate stability of each of the *M* APs based on the information of the *M* APs to acquire *M* stability evaluation values, and to acquire the information of the *N* APs by acquiring information of APs corresponding to *N* stability evaluation values of the *M* stability evaluation values, where each of the *N* stability evaluation the *M* APs based on the information of the *M* APs is configured to acquire *M* stability evaluation index sets by extracting stability evaluation indexes from the information of the *M* APs, and to evaluate the stability of each of the *M* APs based on the *M* stability evaluation index sets.

In one embodiment, the stability evaluation index for each AP includes at least one of: the number of access users of each AP, a signal strength value of each AP, a network rate of each AP, and a network bandwidth of each AP.

In one embodiment, the beacon frame is broadcast by the target AP, and the target AP is configured to broadcast the beacon frame at a broadcast frequency larger than the preset scan frequency.

In one embodiment, when the target AP is scanned by the mobile terminal, the processor 3000 is further configured to input a password automatically and to connect the mobile terminal to the target AP previously connected by the mobile terminal based on the password.

Embodiments of the present disclosure further provide a computer storage medium. The computer storage medium is configured to store programs which, when executed, are operable to implement part or all of operations of the methods for executing Wi-Fi network scan described in the foregoing method embodiments.

Embodiments of the present disclosure further provide a computer program product. The computer program product includes a non-transitory computer readable storage medium configured to store computer programs. The computer programs are operable with a computer to implement part or all of operations of the methods for executing Wi-Fi network scan described in the foregoing method embodiments.

Although the present disclosure has been described herein in combination with various embodiments of the present disclosure, in the process of implementing the present disclosure seeking for protection, those skilled in the art will understand and achieve other embodiments according to the specification, the claims, and the accompanying drawings of the present disclosure as viewed. The term "comprising" in the claims does not exclude other components or steps. In addition, the term "a/ an" or "one" does not exclude a plurality of components or steps. A single processor or other units may fulfill several functions described in the claims.

Those skilled in the art will appreciate that embodiments of the present disclosure can be provided as a method, an apparatus (device), or a computer program product. Accordingly, the above embodiments of present disclosure may be implemented through hardware, software, or any other combination thereof. In addition, the present disclosure may take the form of a computer program product embodied on one or more computer readable storage medium (including but not limited to a disk memory, a CD-ROM, an optical memory, etc.) including computer readable program codes. Computer programs are stored or distributed in a suitable medium, and are provided together with other hardware or are as part of certain hardware, or are distributed in other forms, such as an Internet-based form, other wired or wireless telecommunication-system-based form, or the like.

The present disclosure has been described with reference to flow charts and/or block diagrams of the methods, apparatuses (devices), and computer program products of the embodiments of the present disclosure. It will be understood that computer program instructions are operable to implement each procedure of the flow charts and/or each block of the block diagrams, and to implement a combination thereof. These computer program instructions can be provided for a processor of a general-purpose computer, a special-purpose computer, an embedded processor, or other programmable data processing devices to produce an equipment, to enable instructions executed by a processor of a computer or other programmable data processing devices to produce a device for implementing functions specified in one or more procedures of the flow charts or one or more blocks of the block diagrams.

These computer program instructions can also be stored in a computer readable memory that can direct a computer or other programmable data processing devices to operate in a certain manner, to enable instructions stored in the computer readable memory to produce an article of manufacture including an instruction device for implementing functions specified in one or more procedures of the flow charts or one or more blocks of the block diagrams.

These computer program instructions can also be loaded into a computer or other programmable data processing devices, to enable a computer or other programmable devices to execute a series of operational steps to achieve computer processing, such that instructions executed on a computer or other programmable devices can provide steps for implementing functions specified in one or more procedures of the flow charts or one or more blocks of the block diagrams.

## Claims

1. A method for wireless fidelity, Wi-Fi, network scan, the method being executed by a mobile terminal, the method comprising:
monitoring (101) whether a Wi-Fi chip of a mobile terminal receives a beacon frame from a target access point, AP, and executing Wi-Fi network scan at a preset scan frequency, after the mobile terminal is disconnected from the target AP;
**characterized in that** the method further comprises:
the mobile terminal continuing monitoring whether the Wi-Fi chip receives a beacon frame from the target AP, after the mobile terminal is disconnected from the target AP;
continuing (102) to execute the Wi-Fi network scan at the preset scan frequency, when the Wi-Fi chip of the mobile terminal fails to receive the beacon frame from the target AP; and
initiating (101) a Wi-Fi network scan mode, without waiting for a complete scan cycle, corresponding to the preset scan frequency, when the Wi-Fi chip of the mobile terminal receives the beacon frame from the target AP.

2. The method of claim 1, wherein initiating the Wi-Fi network scan mode comprises:
acquiring AP information of the target AP corresponding to the beacon frame; and
executing the Wi-Fi network scan based on the AP information.

3. The method of claim 1, wherein initiating the Wi-Fi network scan mode comprises:
transmitting a scan instruction to the Wi-Fi chip when the Wi-Fi chip fails to be in a scan state; and
executing the Wi-Fi network scan in response to the scan instruction.

4. The method of claim 3, wherein executing the Wi-Fi network scan in response to the scan instruction comprises:
acquiring a previous scan record associated with the target AP, wherein the previous scan record comprises information of *M*APs, and *M* is an integer largerthan one;
selecting information of *N* APs from the information of the *M* APs, wherein *N* is a positive integer smaller than or equal to *M;* and
executing the Wi-Fi network scan based on the information of the *N* APs.

5. The method of claim 4, wherein selecting the information of the *N* APs from the information of the *M* APs comprises:
acquiring *M* stability evaluation index sets by extracting stability evaluation indexes from the information of the *M* APs, wherein each of the *M* stability evaluation index sets contains at least one of the stability evaluation indexes, and the stability evaluation indexes comprise at least one of: the number of access users, a signal strength value, a network rate, and a network bandwidths;
acquiring *M* stability evaluation values according to the *M* stability evaluation index sets and corresponding weights for the stability evaluation indexes contained in the *M* stability evaluation index sets; and
acquiring the information of the *N* APs by acquiring information of APs corresponding to *N* stability evaluation values among the *M* stability evaluation values, wherein each of the *N* stability evaluation values is larger than a preset stability threshold.

6. The method of any of claims 1 to 5, further comprising:
inputting a password automatically and connecting the mobile terminal to the target AP based on the password, when the target AP previously connected by the mobile terminal is scanned by the mobile terminal.

7. A device for wireless fidelity, Wi-Fi, scanning, comprising:
a processing unit (301), configured to monitor whether a Wi-Fi chip of a mobile terminal receives a beacon frame from a target access point, AP, and to execute Wi-Fi network scan at a preset scan frequency, after the mobile terminal is disconnected from the target AP;
**characterized in that** the device further comprises:
an executing unit (302), configured to continue to monitor whether the Wi-Fi chip receives a beacon frame from the target AP after the mobile terminal is disconnected from the target AP, and continue to execute the Wi-Fi network scan at the preset scan frequency when the Wi-Fi chip of the mobile terminal fails to receive the beacon frame from the target AP; and
an initiating unit (303), configured to initiate a Wi-Fi network scan mode, without waiting for a complete scan cycle, corresponding to the preset scan frequency, when the Wi-Fi chip of the mobile terminal receives the beacon frame from the target AP.

8. The device of claim 7, wherein the initiating unit (303) comprises:
a first acquiring module (3031), configured to acquire AP information of the target AP corresponding to the beacon frame; and
a first scanning module (3032), configured to execute the Wi-Fi network scan based on the AP information.

9. The device of claim 7, wherein the initiating unit (303) comprises:
a transmitting module (3033), configured to transmit a scan instruction to the Wi-Fi chip when the Wi-Fi chip fails to be in a scan state; and
a second scanning module (3034), configured to execute the Wi-Fi network scan in response to the scan instruction.

10. The device of claim 9, wherein the second scanning module (3034) comprises:
a second acquiring module (401), configured to acquire a previous scan record associated with the target AP, wherein the previous scan record comprises information of *M* APs, and M is an integer larger than one;
a selecting module (402), configured to select information of *N* APs from the information of the *M* APs, wherein *N* is a positive integer smaller than or equal to *M*; and
a third scanning module (403), configured to execute the Wi-Fi network scan based on the information of the *N* APs.

11. The device of claim 10, wherein the selecting module (402) comprises:
an evaluating module (4021), configured to acquire M stability evaluation index sets by extracting stability evaluation indexes from the information of the *M* APs, and acquire *M* stability evaluation values according to the *M* stability evaluation index sets and corresponding weights for the stability evaluation indexes contained in the *M* stability evaluation index sets, wherein each of the *M* stability evaluation index sets contains at least one of the stability evaluation indexes, and the stability evaluation indexes comprise at least one of: the number of access users, a signal strength value, a network rate, and a network bandwidths; and
a third acquiring module (4022), configured to acquire the information of the *N* APs by acquiring information of APs corresponding to N stability evaluation values among the *M* stability evaluation values, wherein each of the *N* stability evaluation values is larger than a preset stability threshold.

12. A computer program comprising instructions which, when the program is executed by a mobile terminal, cause the mobile terminal to carry out the method steps of any of the claims 1 to 6.

13. A computer-readable medium comprising instructions which, when executed by a mobile terminal, cause the mobile terminal to carry out the method steps of any of the claims 1 to 6.

## Patentansprüche

1. Verfahren zur Wireless Fidelity-Netzwerkabtastung, Wi-Fi-Netzwerkabtastung, wobei das Verfahren von einem mobilen Endgerät ausgeführt wird, wobei das Verfahren umfasst:
Überwachen (101), ob ein Wi-Fi-Chip eines mobilen Endgerätes einen Beacon-Frame von einem Ziel-Zugangspunkt, Ziel-AP, empfängt, und Ausführen einer Wi-Fi-Netzwerkabtastung mit einer voreingestellten Abtastfrequenz, nachdem das mobile Endgerät von dem Ziel-AP getrennt wurde;
**dadurch gekennzeichnet, dass** das Verfahren ferner umfasst, dass:
das mobile Endgerät weiterhin überwacht, ob der Wi-Fi-Chip einen Beacon-Frame von dem Ziel-AP empfängt, nachdem das mobile Endgerät von dem Ziel-AP getrennt wurde;
das Ausführen der Wi-Fi-Netzwerkabtastung mit der voreingestellten Abtastfrequenz fortgesetzt wird (102), wenn der Wi-Fi-Chip des mobilen Endgerätes den Beacon-Frame von dem Ziel-AP nicht empfängt; und
ein Wi-Fi-Netzwerkabtastungsmodus eingeleitet wird (101), ohne einen vollständigen Abtastzyklus entsprechend der voreingestellten Abtastfrequenz abzuwarten, wenn der Wi-Fi-Chip des mobilen Endgerätes den Beacon-Frame von dem Ziel-AP empfängt.

2. Verfahren nach Anspruch 1, wobei das Einleiten des Wi-Fi-Netzwerkabtastungsmodus umfasst:
Beschaffen von AP-Informationen des Ziel-AP entsprechend dem Beacon-Frame; und
Ausführen der Wi-Fi-Netzwerkabtastung auf der Grundlage der AP-Informationen.

3. Verfahren nach Anspruch 1, wobei das Einleiten des Wi-Fi-Netzwerkabtastungsmodus umfasst:
Übertragen eines Abtastbefehls an den Wi-Fi-Chip, wenn sich der Wi-Fi-Chip nicht in einem Abtastungszustand befindet; und
Ausführen der Wi-Fi-Netzwerkabtastung als Reaktion auf den Abtastbefehl.

4. Verfahren nach Anspruch 3, wobei das Ausführen der Wi-Fi-Netzwerkabtastung als Reaktion auf den Abtastbefehl umfasst:
Beschaffen eines vorherigen Abtastdatensatzes, der dem Ziel-AP zugeordnet ist, wobei der vorherige Abtastdatensatz Informationen von M APs umfasst und M eine ganze Zahl größer als eins ist;
Auswählen von Informationen von N APs aus den Informationen der M APs, wobei N eine positive ganze Zahl kleiner oder gleich M ist; und
Durchführen der Wi-Fi-Netzwerkabtastung auf der Grundlage der Informationen der *N* APs.

5. Verfahren nach Anspruch 4, wobei das Auswählen der Informationen der *N* APs aus den Informationen der *M* APs umfasst:
Beschaffen von *M* Stabilitätsbewertungsindexsätzen durch Extrahieren von Stabilitätsbewertungsindizes aus den Informationen der *M* APs, wobei jeder der *M* Stabilitätsbewertungsindexsätze mindestens einen der Stabilitätsbewertungsindizes enthält und die Stabilitätsbewertungsindizes mindestens eines der folgenden Elemente umfassen: die Anzahl der Zugangsnutzer, einen Signalstärkewert, eine Netzwerkrate und eine Netzwerkbandbreite;
Beschaffen von *M* Stabilitätsbewertungswerten gemäß den *M* Stabilitätsbewertungsindexsätzen und von entsprechenden Gewichtungen für die Stabilitätsbewertungsindizes, die in den *M* Stabilitätsbewertungsindexsätzen enthalten sind; und
Beschaffen der Informationen der *N* APs durch Beschaffen von Informationen von APs, die *N* Stabilitätsbewertungswerten unter den *M* Stabilitätsbewertungswerten entsprechen, wobei jeder der *N* Stabilitätsbewertungswerte größer als ein voreingestellter Stabilitätsschwellenwert ist.

6. Verfahren nach einem der Ansprüche 1 bis 5, das ferner umfasst:
automatisches Eingeben eines Passworts und Verbinden des mobilen Endgeräts mit dem Ziel-AP auf der Grundlage des Passworts, wenn der zuvor mit dem mobilen Endgerät verbundene Ziel-AP durch das mobile Endgerät abgetastet wird.

7. Vorrichtung zur Wireless Fidelity-Abtastung, Wi-Fi-Abtastung, umfassend:
eine Verarbeitungseinheit (301), die konfiguriert ist, um zu überwachen, ob ein Wi-Fi-Chip eines mobilen Endgerätes einen Beacon-Frame von einem Ziel-Zugangspunkt, Ziel-AP, empfängt, und um eine Wi-Fi-Netzwerkabtastung mit einer voreingestellten Abtastfrequenz auszuführen, nachdem das mobile Endgerät von dem Ziel-AP getrennt wurde;
**dadurch gekennzeichnet, dass** die Vorrichtung ferner umfasst:
eine Ausführungseinheit (302), die konfiguriert ist, um weiterhin zu überwachen, ob der Wi-Fi-Chip einen Beacon-Frame von dem Ziel-AP empfängt, nachdem das mobile Endgerät von dem Ziel-AP getrennt wurde, und um weiterhin die Wi-Fi-Netzwerkabtastung mit der voreingestellten Abtastfrequenz auszuführen, wenn der Wi-Fi-Chip des mobilen Endgerätes den Beacon-Frame von dem Ziel-AP nicht empfängt; und
eine Einleitungseinheit (303), die konfiguriert ist, um einen Wi-Fi-Netzwerkabtastungsmodus einzuleiten, ohne einen vollständigen Abtastzyklus entsprechend der voreingestellten Abtastfrequenz abzuwarten, wenn der Wi-Fi-Chip des mobilen Endgeräts den Beacon-Frame von dem Ziel-AP empfängt.

8. Vorrichtung nach Anspruch 7, wobei die Einleitungseinheit (303) umfasst:
ein erstes Beschaffungsmodul (3031), das konfiguriert ist, um AP-Informationen des Ziel-AP zu beschaffen, die dem Beacon-Frame entsprechen; und
ein erstes Abtastmodul (3032), das konfiguriert ist, um die Wi-Fi-Netzwerkabtastung auf der Grundlage der AP-Informationen auszuführen.

9. Vorrichtung nach Anspruch 7, wobei die Einleitungseinheit (303) umfasst:
ein Übertragungsmodul (3033), das konfiguriert ist, um einen Abtastbefehl an den Wi-Fi-Chip zu übertragen, wenn sich der Wi-Fi-Chip nicht in einem Abtastungszustand befindet; und
ein zweites Abtastmodul (3034), das konfiguriert ist, um die Wi-Fi-Netzwerkabtastung als Reaktion auf den Abtastbefehl auszuführen.

10. Vorrichtung nach Anspruch 9, wobei das zweite Abtastmodul (3034) umfasst:
ein zweites Beschaffungsmodul (401), das konfiguriert ist, um einen vorherigen Abtastdatensatz zu beschaffen, der dem Ziel-AP zugeordnet ist, wobei der vorherige Abtastdatensatz Informationen von *M* APs umfasst und M eine ganze Zahl größer als eins ist;
ein Auswahlmodul (402), das konfiguriert ist, um Informationen von *N* APs aus den Informationen der *M* APs auszuwählen, wobei N eine positive ganze Zahl kleiner oder gleich *M* ist; und
ein drittes Abtastmodul (403), das konfiguriert ist, um die Wi-Fi-Netzwerkabtastung auf der Grundlage der Informationen der *N* APs auszuführen.

11. Vorrichtung nach Anspruch 10, wobei das Auswahlmodul (402) umfasst:
ein Bewertungsmodul (4021), das konfiguriert ist, um *M* Stabilitätsbewertungsindexsätze durch Extrahieren von Stabilitätsbewertungsindizes aus den Informationen der *M* APs zu beschaffen, und um *M* Stabilitätsbewertungswerte gemäß den *M* Stabilitätsbewertungsindexsätzen und entsprechende Gewichtungen für die Stabilitätsbewertungsindizes, die in den *M* Stabilitätsbewertungsindexsätzen enthalten sind, zu beschaffen, wobei jeder der *M* Stabilitätsbewertungsindexsätze mindestens einen der Stabilitätsbewertungsindizes enthält und die Stabilitätsbewertungsindizes mindestens eines der folgenden Elemente umfassen: die Anzahl der Zugangsnutzer, einen Signalstärkewert, eine Netzwerkrate und eine Netzwerkbandbreite; und
ein drittes Beschaffungsmodul (4022), das konfiguriert ist, um die Informationen der *N* APs zu beschaffen, indem es Informationen von APs beschafft, die *N* Stabilitätsbewertungswerten unter den *M* Stabilitätsbewertungswerten entsprechen, wobei jeder der *N* Stabilitätsbewertungswerte größer als ein voreingestellter Stabilitätsschwellenwert ist.

12. Computerprogramm mit Befehlen, die, wenn das Programm von einem mobilen Endgerät ausgeführt wird, das mobile Endgerät veranlassen, die Verfahrensschritte eines der Ansprüche 1 bis 6 auszuführen.

13. Computerlesbares Medium mit Befehlen, die, wenn sie von einem mobilen Endgerät ausgeführt werden, das mobile Endgerät veranlassen, die Verfahrensschritte eines der Ansprüche 1 bis 6 auszuführen.

## Revendications

1. Procédé de balayage de réseau de fidélité sans fil, Wi-Fi, le procédé étant exécuté par un terminal mobile, le procédé comprenant les étapes consistant à :
surveiller (101) si une puce Wi-Fi d'un terminal mobile reçoit ou non une trame balise d'un point d'accès cible, PA, et exécuter un balayage de réseau Wi-Fi à une fréquence de balayage prédéfinie après que le terminal mobile a été déconnecté du point d'accès cible ;
**caractérisé en ce que** le procédé comprend en outre les étapes suivantes :
le terminal mobile continue à surveiller si la puce Wi-Fi reçoit une trame balise du PA cible après que le terminal mobile a été déconnecté du PA cible ;
continuer (102) à exécuter le balayage de réseau Wi-Fi à la fréquence de balayage prédéfinie lorsque la puce Wi-Fi du terminal mobile ne reçoit pas la trame balise du PA cible ; et
lancer (101) un mode de balayage de réseau Wi-Fi sans attendre un cycle de balayage complet, correspondant à la fréquence de balayage prédéfinie, lorsque la puce Wi-Fi du terminal mobile reçoit la trame balise du PA cible.

2. Procédé selon la revendication 1, dans lequel l'étape consistant à lancer le mode de balayage de réseau Wi-Fi comprend les étapes consistant à :
acquérir des informations de PA du PA cible correspondant à la trame balise ; et
exécuter le balayage de réseau Wi-Fi sur la base des informations de PA.

3. Procédé selon la revendication 1, dans lequel l'étape consistant à lancer le mode de balayage de réseau Wi-Fi comprend les étapes consistant à :
transmettre une instruction de balayage à la puce Wi-Fi lorsque la puce Wi-Fi ne se trouve pas dans un état de balayage ; et
exécuter le balayage de réseau Wi-Fi en réponse à l'instruction de balayage.

4. Procédé selon la revendication 3, dans lequel l'étape consistant à exécuter le balayage de réseau Wi-Fi en réponse à l'instruction de balayage comprend les étapes consistant à :
acquérir un enregistrement de balayage précédent associé au PA cible, l'enregistrement de balayage précédent comprenant des informations de *M* PA, *M* étant un entier supérieur à un ;
sélectionner les informations de *N* PA à partir des informations des *M* PA, *N* étant un entier positif inférieur ou égal à *M* ; et
exécuter le balayage de réseau Wi-Fi sur la base des informations des *N* PA.

5. Procédé selon la revendication 4, dans lequel l'étape consistant à sélectionner les informations des *N* PA à partir des informations des *M* PA comprend les étapes consistant à :
acquérir *M* ensembles d'indices d'évaluation de stabilité en extrayant des indices d'évaluation de stabilité des informations des *M* PA, chacun des *M* ensembles d'indices d'évaluation de stabilité contenant au moins l'un des indices d'évaluation de stabilité, et les indices d'évaluation de stabilité comprenant au moins l'un des éléments suivants : le nombre d'utilisateurs en accès, une valeur d'intensité de signal, un débit du réseau et une largeur de bande du réseau ;
acquérir *M* valeurs d'évaluation de stabilité en fonction des *M* ensembles d'indices d'évaluation de stabilité et de poids correspondants pour les indices d'évaluation de stabilité contenus dans les *M* ensembles d'indices d'évaluation de stabilité ; et
acquérir les informations des *N* PA en acquérant les informations des PA correspondant à *N* valeurs d'évaluation de stabilité parmi les *M* valeurs d'évaluation de stabilité, chacune des *N* valeurs d'évaluation de stabilité étant supérieure à un seuil de stabilité prédéfini.

6. Procédé selon l'une quelconque des revendications 1 à 5, comprenant en outre les étapes consistant à :
entrer automatiquement un mot de passe et connecter le terminal mobile au PA cible sur la base du mot de passe lorsque le PA cible précédemment connecté par le terminal mobile est balayé par le terminal mobile.

7. Dispositif de balayage de fidélité sans fil, Wi-Fi, comprenant :
une unité de traitement (301), configurée pour surveiller si une puce Wi-Fi d'un terminal mobile reçoit une trame balise d'un point d'accès cible, PA, et pour exécuter un balayage de réseau Wi-Fi à une fréquence de balayage prédéfinie après que le terminal mobile a été déconnecté du PA cible ;
**caractérisé en ce que** le dispositif comprend en outre :
une unité d'exécution (302), configurée pour continuer à surveiller si la puce Wi-Fi reçoit une trame balise du PA cible après que le terminal mobile a été déconnecté du PA cible, et pour continuer à exécuter le balayage de réseau Wi-Fi à la fréquence de balayage prédéfinie lorsque la puce Wi-Fi du terminal mobile ne reçoit pas la trame balise du PA cible ; et
une unité de lancement (303), configurée pour lancer un mode de balayage de réseau Wi-Fi sans attendre un cycle de balayage complet, correspondant à la fréquence de balayage prédéfinie, lorsque la puce Wi-Fi du terminal mobile reçoit la trame balise du PA cible.

8. Dispositif selon la revendication 7, dans lequel l'unité de lancement (303) comprend :
un premier module d'acquisition (3031), configuré pour acquérir des informations de PA du PA cible correspondant à la trame balise ; et
un premier module de balayage (3032), configuré pour exécuter le balayage de réseau Wi-Fi sur la base des informations de PA.

9. Dispositif selon la revendication 7, dans lequel l'unité de lancement (303) comprend :
un module de transmission (3033), configuré pour transmettre une instruction de balayage à la puce Wi-Fi lorsque la puce Wi-Fi ne se trouve pas dans un état de balayage ; et
un deuxième module de balayage (3034), configuré pour exécuter le balayage de réseau Wi-Fi en réponse à l'instruction de balayage.

10. Dispositif selon la revendication 9, dans lequel le deuxième module de balayage (3034) comprend :
un deuxième module d'acquisition (401), configuré pour acquérir un enregistrement de balayage précédent associé au PA cible, l'enregistrement de balayage précédent comprenant les informations de *M* PA, *M* étant un entier supérieur à un ;
un module de sélection (402), configuré pour sélectionner les informations de *N* PA à partir des informations des *M* PA, *N* étant un entier positif inférieur ou égal à *M*; et
un troisième module de balayage (403), configuré pour exécuter le balayage de réseau Wi-Fi sur la base des informations des *N* PA.

11. Dispositif selon la revendication 10, dans lequel le module de sélection (402) comprend :
un module d'évaluation (4021), configuré pour acquérir *M* ensembles d'indices d'évaluation de stabilité en extrayant des indices d'évaluation de stabilité des informations des *M* PA, et pour acquérir *M* valeurs d'évaluation de stabilité en fonction des *M* ensembles d'indices d'évaluation de stabilité et de poids correspondants pour les indices d'évaluation de stabilité contenus dans les *M* ensembles d'indices d'évaluation de stabilité, chacun des *M* ensembles d'indices d'évaluation de stabilité contenant au moins l'un des indices d'évaluation de stabilité, et les indices d'évaluation de stabilité comprenant au moins l'un des éléments suivants : le nombre d'utilisateurs en accès, une valeur d'intensité de signal, un débit du réseau et une largeur de bande du réseau ; et
un troisième module d'acquisition (4022), configuré pour acquérir les informations des *N* PA en acquérant les informations des PA correspondant à *N* valeurs d'évaluation de stabilité parmi les *M* valeurs d'évaluation de stabilité, chacune des *N* valeurs d'évaluation de stabilité étant supérieure à un seuil de stabilité prédéfini.

12. Programme d'ordinateur comprenant des instructions qui, lorsque le programme est exécuté par un terminal mobile, amènent le terminal mobile à mettre en œuvre les étapes de procédé selon l'une quelconque des revendications 1 à 6.

13. Support lisible par ordinateur comprenant des instructions qui, lorsqu'elles sont exécutées par un terminal mobile, amènent le terminal mobile à mettre en œuvre les étapes de procédé selon l'une quelconque des revendications 1 à 6.
